# EUROPÄISCHE PATENTSCHRIFT

(11) **EP 2 839 183 B1**
(45) Veröffentlichungstag und Bekanntmachung des Hinweises auf die Patenterteilung: **08.03.2017**
(21) Anmeldenummer: 13717765.5
(22) Anmeldetag: 16.04.2013
(51) Int. Cl.: F16G 13/16

(54) **ENERGIEFÜHRUNGSKETTE MIT ROLLEN**
CABLE DRAG CHAIN COMPRISING ROLLERS
CHAÎNE PORTE-CÂBLES À ROULEAUX

(30) Priorität: 19.04.2012 DE 202012003903 U
(43) Veröffentlichungstag der Anmeldung: 25.02.2015
(73) Patentinhaber: Igus GmbH, 51147 Köln (DE)
(72) Erfinder: HERMEY, Andreas, 53773 Hennef (DE)
(74) Vertreter: Lippert Stachow Patentanwälte Rechtsanwälte
(86) Internationale Anmeldenummer: PCT/EP2013/057889
(87) Internationale Veröffentlichungsnummer: WO 2013/156469

(56) Entgegenhaltungen:
- WO-A1-98/31950
- WO-A1-99/57457
- DE-A1- 2 656 638
- DE-A1- 19 715 531
- DE-U1-202006 006 638
- JP-A- H06 182 463

## Beschreibung

Die Erfindung betrifft eine Energieführungskette nach dem Oberbegriff des Hauptanspruchs.

Solche Energieführungsketten werden verwendet, um einen gegenüber einer ortsfesten Anschlussstelle beweglichen Verbraucher mit Energieträgern, wie Elektrizität, Wasser, Gas und dergleichen zu versorgen und/oder Signale zu übertragen. Sie sind aus einer Anzahl von gegeneinander verschwenkbaren Kettengliedern zusammengesetzt, die aus zwei einander gegenüberliegenden Seitenlaschen und diese verbindenden Querstegen aufgebaut sind und in dem dadurch begrenzten Raum Kabel, Schläuche und dergleichen aufnehmen können. Der Raum kann durch Trennstege zwischen den Querstegen weiter unterteilt sein. Zur Anpassung an den bei der Bewegung des Verbrauchers sich ändernden Abstand zur Anschlussstelle bildet die Energieführungskette eine Schlaufe, die ein Obertrum, ein Untertrum und einen Umlenkbereich mit einem durch Begrenzung des Schwenkwinkels zwischen benachbarten Laschen vorgegebenen Krümmungsradius aufweist. Dabei kann das Obertrum mindestens teilweise auf dem Untertrum ruhen und bei der Bewegung des Verbrauchers darauf gleiten. Je nach den räumlichen Gegebenheiten, der Länge der Kette, dem Gewicht und den Eigenschaften der von der Kette aufgenommenen Versorgungsleitungen usw. können die erforderlichen Krümmungsradien im Umlenkbereich unterschiedlich sein. Um Ein Seitliches Ausbrechen der Kette zu verhindern, können Führungsschienen vorhanden sein.

Eine allgemeine Aufgabe bei der Gestaltung solcher Energieführungsketten besteht darin, dass die Bewegung des Obertrum auf dem Untertrum möglichst sicher, Energie sparend und geräuscharm erfolgen kann. Hierzu werden die zum Inneren der Schlaufe weisenden Flächen der Kettenglieder möglichst glatt ausgeführt und können zusätzlich mit Laufrollen versehen werden.

Das deutsche Gebrauchsmuster DE 20 2006 006 638 U1 beschreibt eine solche Kette, deren Seitenlaschen mit Laufrollen versehen sind, die auf einer Lauffläche abrollen können, die von den Schmalseiten der Seitenlaschen des gestreckten gegenüberliegenden Trums gebildet werden. Bei dieser Kette sind die Seitenlaschen eines Seitenlaschenstrangs so gekröpft, dass sie zum Teil nach außen und zum Teil nach innen weisen. Wenigstens teilweise sind in diese Seitenlaschen Laufrollen eingebaut.

Die DE 197 15 531 A1 offenbart eine andere Gestaltung einer Energieführungskette ohne Laufrollen. Hierbei setzt sich jeder Seitenlaschenstrang aus abwechselnd miteinander verbundenen Innen- und Außenlaschen zusammen. Demgemäß besteht jedes Kettenglied entweder aus zwei Innenlaschen oder zwei Außenlaschen, jeweils mit entsprechenden Querstegen. Der maximale Schwenkwinkel zwischen benachbarten Laschen und damit der minimale Krümmungsradius der Kette wird durch Anschläge in den Überlappungsbereichen beider Laschenarten definiert.

Aufgabe der Erfindung ist es, eine Energieführungskette anzugeben, welche einerseits verbessertes Laufverhalten zeigt, andererseits auf einfache Weise an unterschiedliche Krümmungsradien angepasst werden kann, und die rationell herstellbar ist.

Diese Aufgabe wird durch eine Energieführungskette nach dem Hauptanspruch gelöst.

Es hat sich überraschenderweise gezeigt, dass es für ein leichtes Verfahren der Energieführungskette ausreichend ist, nur die Außenlaschen mit Laufrollen zu versehen. Die Laufrollen sind dabei in die Seitenlaschen eingelassen, damit sie stabil untergebracht sind und nicht mit gegebenenfalls vorhandenen Führungselementen kollidieren können. Je nach Breite, Länge, Belastung und anderen Anwendungsdaten ist der Energieführungskette kann es ausreichend sein, nur einige der Außenlaschen mit Laufrollen zu versehen. Erfindungsgemäß können aber auch alle Außenlaschen Laufrollen aufweisen. In der Praxis hat sich ein Abstand der Laufrollen in Längsrichtung der Kette der Größenordnung von beispielsweise 0,3 bis 2 m, bevorzugt 0,5 bis 1 m, als brauchbar erwiesen.

Bei der erfindungsgemäßen Energieführungskette brauchen die aufwändiger herzustellenden Außenlaschen mit den Laufrollen nur in jeweils einer Version für jede Größe hergestellt und im Lager gehalten zu werden, weil der minimale Krümmungsradius nur über die einfacher gestalteten Innenlaschen festgelegt wird. Damit wird deutlich, dass mit einer geringeren Anzahl unterschiedlicher Teile die erforderliche Vielfalt unterschiedlicher Ketten bereitgestellt werden kann.

In einer bevorzugten Ausführungsform setzen sich die Außenlaschen aus zwei Laschenteilen (Laschenpaar) zusammen, die um eine gemeinsame Schwenkachse gegeneinander schwenkbar sind. Der Schwenkwinkel wird auch hier durch einen Anschlag an einem Laschenteil in Wechselwirkung mit einem Widerlager am andern Laschenteil begrenzt. Obwohl es grundsätzlich möglich ist, auch den maximalen Schwenkwinkel innerhalb der Außenlasche durch Verwendung unterschiedlicher Laschenteile variabel zu gestalten, hat es sich gezeigt, dass es ausreichend sein kann, mit einem festen Schwenkwinkel innerhalb der Außenlasche zu arbeiten und den Krümmungsradius nur über die Anschläge an den Innenlaschen festzulegen. Damit kann der oben geschilderte Vorteil der Erfindung auch bei dieser Ausführungsform erhalten bleiben.

Zweckmäßig ist bei dieser Ausführungsform die Laufrolle so in der Außenlasche angeordnet, dass ihre Drehachse mit der Schwenkachse der Laschenteile innerhalb der Außenlasche zusammenfällt.

Bevorzugt wird die mit der Laufrolle versehene Außenlasche so gestaltet, dass der Abstand zwischen den mit den benachbarten Innenlaschen gemeinsamen beiden Schwenkachsen doppelt so groß ist, wie der Abstand der beiden Schwenkachsen einer Innenlasche mit den benachbarten Außenlaschen. Bei der Ausbildung der Außenlaschen als Laschenpaare ergibt sich jedoch wieder Äquidistanz zwischen den Schwenkachsen.

Die Laschenpaare der Außenlaschen sind zweckmäßig so gestaltet, dass ihre außen liegenden Gelenkbereiche, die sich beim Zusammenbau mit den Gelenkbereichen der benachbarten Innenlaschen überlappen, spiegelsymmetrisch gegenüber der senkrechten Mittelebene (quer zur Längsrichtung der Laschen) und spiegelsymmetrisch zu der waagerechten Mittelebene ausgebildet sind.

Die Drehachse der Laufrolle kann so angeordnet sein, dass ihr Abstand zur innen liegenden Schmalseite des Laschenstrangs geringer als der Abstand zur außen liegenden Schmalseite ist.

Die Schmalseiten der Seitenlaschen bilden im gestreckten Zustand der Kette eine durchgängige Lauffläche, auf der die aus den Schmalseiten herausragenden Laufrollen des gegenüberliegenden Trums abrollen können. Im Allgemeinen genügt es für eine sichere Funktion, wenn die Laufrollen um beispielsweise 0,5 bis 2 mm aus der Schmalseite der Seitenlaschen herausragen.

Bevorzugt sind die Querstege mittels geeigneter Befestigungsmittel an den Seitenlaschen befestigt. Solche Befestigungsmittel können beispielsweise elastische Rastverbindungen sein, bei denen zum Beispiel ein an der Seitenlasche angebrachter Zapfen mit einem Vorsprung in eine Ausnehmung im Quersteg elastisch einrastet. Diese Verbindungen können so gestaltet sein, dass sie von Hand lösbar sind. Es sind aber auch Verbindungen möglich, die nicht oder nur mithilfe eines speziellen Werkzeugs gelöst werden können.

Ein besonderer Vorteil der Erfindung ist, dass die Außenlaschen mit den erfindungsgemäßen Merkmalen leicht in vorhandene Energieführungsketten ohne Laufrollen, beispielsweise gemäß der DE 197 15 531 oder aus der Produktlinie E4 des Anmelders, im Austausch gegen in diesen Ketten vorhandene Außenlaschen eingesetzt werden können. Dadurch können auch solche Ketten die Vorteile der Laufrollen nutzen. Der Austausch kann in vielen Fällen ohne Demontage der ganzen Energieführungskette erfolgen. Wie oben erwähnt, reicht je nach den Anwendungsdaten der Austausch einiger Außenlaschen aus.

Die Erfindung wird nun anhand eines Ausführungsbeispiels und der beigegebenen Zeichnungen näher erläutert. Es zeigen
- Figur 1: ein Teil einer erfindungsgemäßen Energieführungskette mit einem Außenlaschenpaar und zwei Innenlaschen in a) Schrägansicht, b) Seitenansicht, c) Querschnitt A-A und d) Querschnitt B-B,
- Figur 2: das erste Teil eines Außenlaschenpaars in a) Ansicht von außen, b) Ansicht von innen, c) Seitenansicht, d) Draufsicht und e) Schrägansicht,
- Figur 3: das zweite Teil eines Außenlaschenpaars in a) Ansicht von außen, b) Ansicht von innen, c) Seitenansicht, d) Draufsicht und e) Schrägansicht,
- Figur 4: ein Kettenglied mit Außenlaschenpaaren im gestreckten Zustand in a) Ansicht von außen, b) Ansicht in kettenlängsrichtung, c) Draufsicht, d), e), f), g) unterschiedlichen Schrägansichten,
- Figur 5: ein Kettenglied mit Außenlaschenpaaren im verschwenkten Zustand in a) Ansicht von außen, b) Ansicht in kettenlängsrichtung, c) Draufsicht, d), e), f), g) unterschiedlichen Schrägansichten.

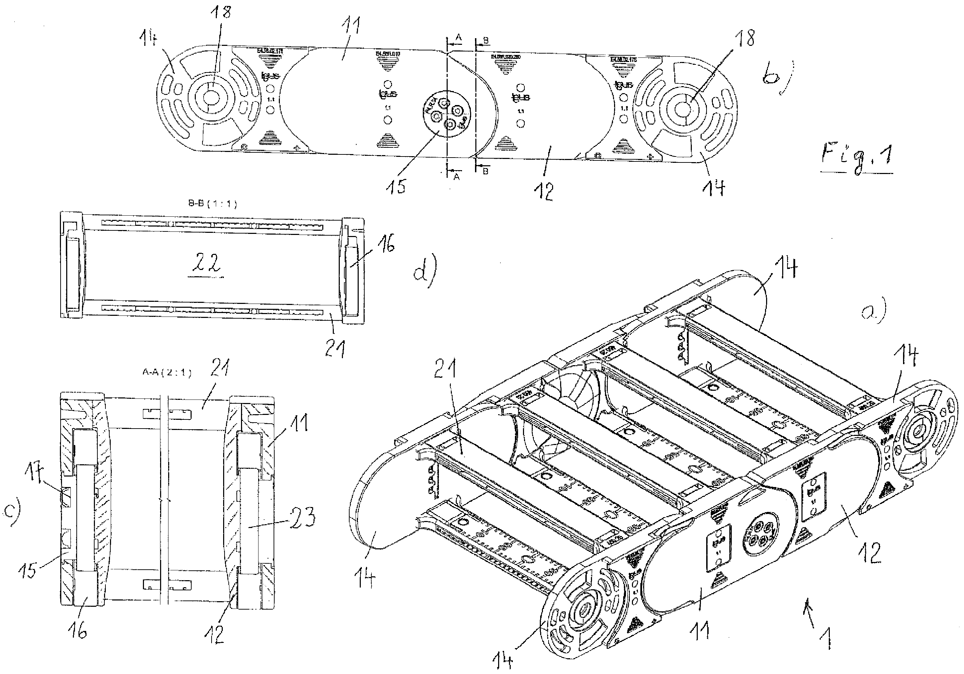

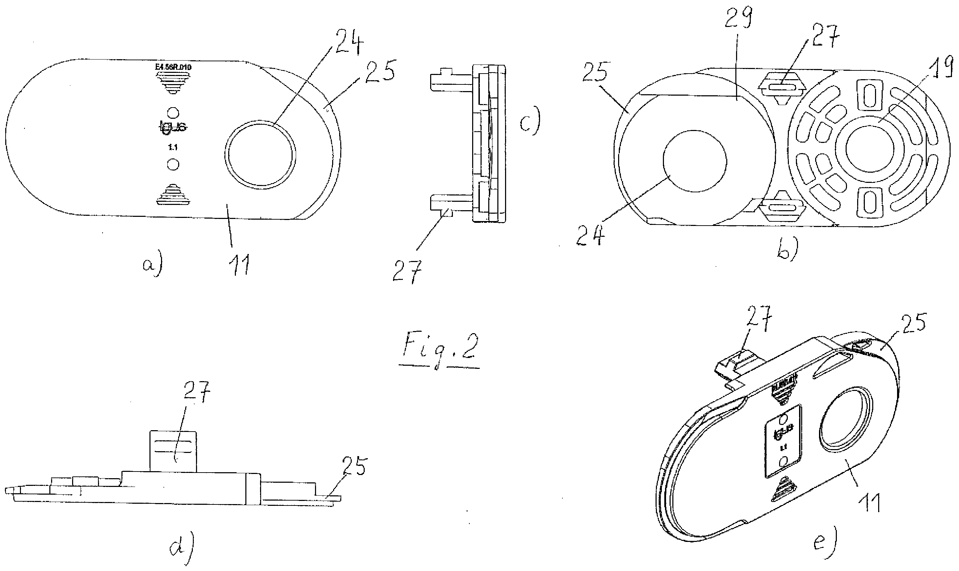

In Figur 1a) ist ein Teil einer Energieführungskette 1 mit einem Außenlaschenpaar 11, 12 und zwei damit gelenkig verbundenen Innenlaschen 14 in Schrägansicht dargestellt. Man erkennt, dass die Kette an den beiden Enden durch Verbinden mit weiteren Außenlaschenpaaren 11, 12, abwechselnd mit Innenlaschen 14 fortgesetzt werden kann. Jedes Teil 11, 12 der Außenlaschenpaare und jede Innenlasche 14 ist über je zwei Querstege 21 mit dem entsprechenden Teil des anderen Laschenstrangs verbunden, so dass sich ein Raum 22 (Figur 1c) für die Aufnahme der Versorgungsleitungen bildet. Figur 1b) zeigt diesen Ausschnitt aus der Energieführungskette von der Außenseite her gesehen im gestreckten Zustand. Man erkennt an den Innenlaschen Schwenkzapfen 18, die bei der Verbindung mit den Außenlaschen in entsprechende Schwenkhülsen 19 (siehe Figur 2b) drehbar eingesetzt werden.

Figur 1c) zeigt einen Querschnitt durch ein Kettenglied mit Außenlaschenpaaren an der Stelle der mit der Schwenkachse zusammenfallenden Drehachse der Laufrollen 16. Die Laufrollen sind auf dem Drehzapfen 23, gegebenenfalls mit einem Kugellagerring, gelagert und nach außen durch eine Abdeckung 15, die mittels Schrauben 17 befestigt ist, geschützt. Die Rolle 16 ragt auf der inneren Schmalseite der Außenlaschen ein wenig über die Laschenteile 11, 12 hinaus, damit sie auf der Lauffläche des gegenüberliegenden Trums abrollen kann, ohne dass die Kettenglieder sich darüber hinaus berühren. Man erkennt auch, dass die Rolle 16 nur auf der Innenseite hervorragt, weil ihre Drehachse sich näher bei der Innenseite befindet. Figur 1d) veranschaulicht noch einmal, dass die Rolle 16 bis auf den geringen, in Figur 1c) dargestellten Abschnitt, vollständig in die Außenlasche eingelassen ist.

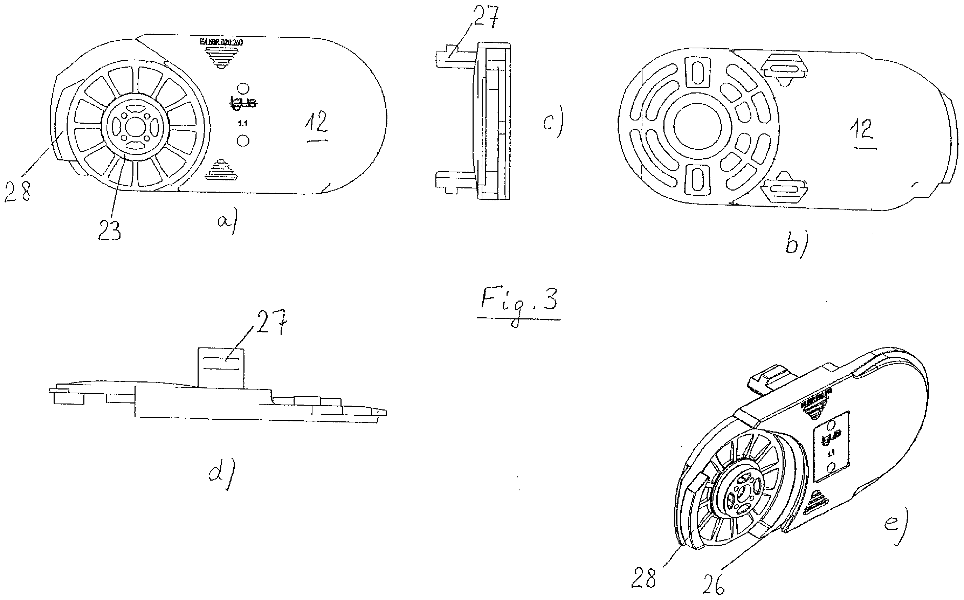

Figur 2a) zeigt das erste Laschenteil 11 von der Außenseite der Kette gesehen. Man erkennt eine Öffnung 24, welche die Abdeckung 15 (Figur 1b) aufnimmt und eine Feder 25, die in eine entsprechende Nut 26 (Figur 3e) des zweiten Laschenteils 12 eingreift, um das Laschenpaar zu stabilisieren. In Figur 2b) ist dasselbe Teil von der Innenseite her gesehen. Hier ist zusätzlich die Schwenkhülse 19 für die Aufnahme des Schwenkzapfens 18 an der Innenlasche 14 (Figur 1b) erkennbar. Figur 2c) zeigt die Seitenansicht dieses Laschenteils 11 und lässt die Zapfen 27 für die Aufnahme der Querstege 21 (Figur 1) erkennen. Diese Merkmale sind auch in der Draufsicht Figur 2d) und in der Schrägansicht Figur 2e) sichtbar.

Figur 3 zeigt die der Figur 2 entsprechenden Ansichten für das zweite Laschenteil 12. Es weist einen Drehzapfen 23 für die Aufnahme der gegebenenfalls kugelgelagerten Laufrolle 16 (hier nicht dargestellt) auf. Außerdem ist ein Anschlag 28 vorgesehen, der beim Schwenken durch Kontakt mit dem Widerlager 29 im ersten Laschenteil (Figur 2b) den Schwenkwinkel begrenzt. Die Nut 26 dient, wie bereits oben beschrieben, der Aufnahme der Feder 25.

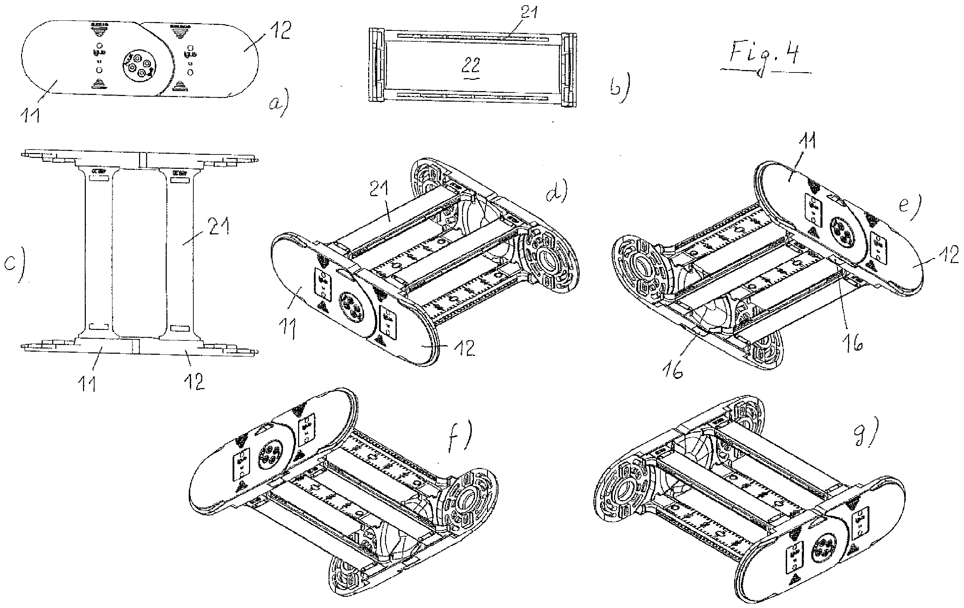

Figur 4 zeigt ein Kettenglied mit Außenlaschenpaaren im gestreckten Zustand in verschiedenen Ansichten: Figur 4a) von der Außenseite der Kette, Figur 4b) in Längsrichtung der Kette, Figur 4c) eine Draufsicht, Figuren 4d) bis 4f) sind Schrägansichten des Kettenglieds aus verschiedenen Richtungen. In Figur 4e) ist deutlich die nur geringfügig zwischen den Laschenteilen 11 und 12 hervorragende Laufrolle 16 zu erkennen.

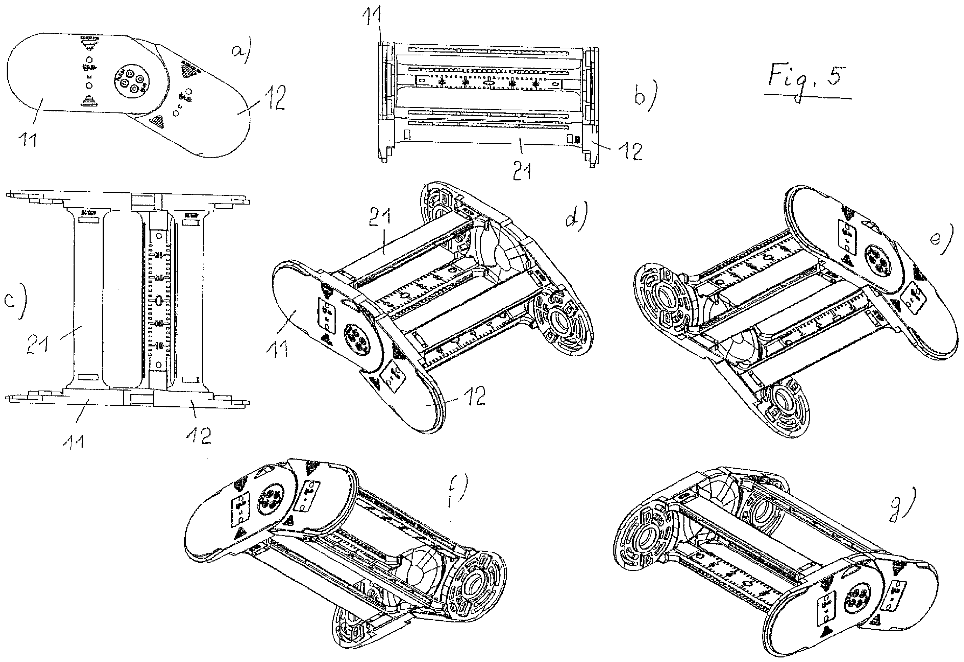

Figur 5 zeigt dasselbe Kettenglied im verschwenkten Zustand in denselben Ansichten. Dabei ist die Laufrolle durch die Schmalseite des Laschenteils 12 verdeckt. Dies ist natürlich kein Problem, weil das Verschwenken nur im Umlenkbereich erfolgt, in dem kein Kontakt zwischen Obertrum und Untertrum besteht. Die Skalen auf den Querstegen helfen bei der Einteilung des Raums und beim Anbringen von Trennstegen.

### Bezugzeichenliste

- 1: Energieführungskette
- 11: erstes Außenlaschenteil
- 12: zweites Außenlaschenteil
- 14: Innenlaschen
- 15: Abdeckung
- 16: Laufrolle
- 17: Schraube
- 18: Schwenkzapfen
- 19: Schwenkhülse
- 21: Quersteg
- 22: Raum für Versorgungsleitungen
- 23: Drehzapfen
- 24: Öffnung für Abdeckung
- 25: Feder
- 26: Nut
- 27: Zapfen für Quersteg
- 28: Anschlag
- 29: Widerlager

## Patentansprüche

1. Energieführungskette (1) zur Führung von Schläuchen, Kabeln und dergleichen mit einer Anzahl gelenkig miteinander verbundener Kettenglieder, die durch zueinander parallele, zu parallelen Seitenlaschensträngen verbundene Seitenlaschen (11, 12) und diese verbindende Querstege (21) gebildet werden, wobei die Seitenlaschen um eine je zwei benachbarten Seitenlaschen gemeinsame Schwenkachse gegeneinander schwenkbar sind, wobei die Energieführungskette (1) so verfahrbar ist, dass sie eine Schlaufe mit einem Obertrum, einem Untertrum und einem diese verbindenden Umlenkbereich bildet, wodurch an den Kettengliedern bezüglich der Schlaufe eine Innenseite und eine Außenseite definiert wird, wobei das Obertrum auf dem Untertrum unter zumindest teilweise Berührung der Innenseiten von Kettengliedern aufliegt, und wobei zumindest an einigen Kettengliedern in die Seitenlaschen eingelassene und zur Innenseite frei liegende Laufrollen (16) vorgesehen sind, die auf einer durch die Schmalseiten der Seitenlaschen (11, 12) des jeweils gegenüberliegenden Trums im gestreckten Zustand der Kette gebildeten Lauffläche abrollen können, **dadurch gekennzeichnet, dass** die Seitenlaschen eines jeden Seitenlaschenstrangs aus einander abwechselnden Innenlaschen (14) und Außenlaschen (11, 12) gebildet sind, und dass mindestens einige der Außenlaschen (11, 12) mit Laufrollen (16) versehen sind, während nur die Innenlaschen (14) Anschläge aufweisen, die den Schwenkwinkel zwischen benachbarten Laschen begrenzen.

2. Energieführungskette nach Anspruch 1, **dadurch gekennzeichnet, dass** zumindest einige der Außenlaschen aus zwei Laschenteilen (11, 12) zusammengesetzt sind, die um eine Schwenkachse gegeneinander verschwenkbar sind.

3. Energieführungskette nach Anspruch 2, **dadurch gekennzeichnet, dass** die zusammengesetzten Außenlaschen mit Laufrollen (16) versehen sind, deren Drehachse mit der Schwenkachse der Laschenteile zusammenfällt.

4. Energieführungskette nach einem der vorangehenden Ansprüche, **dadurch gekennzeichnet, dass** die Querstege (21) mittels geeigneter Befestigungsmittel an den Seitenlaschen befestigt sind.

## Claims

1. An energy guiding chain (1) for guiding hoses, cables and the like, comprising a number of chain links which are connected to one another in an articulated manner and are formed by mutually parallel link plates (11, 12) and cross members (21) connecting the lateral link plates, said link plates being linked to form parallel strands of link plates, wherein the lateral link plates can pivot relative to one another about a pivot axis that is common to two respectively adjacent lateral link plates, wherein the energy guiding chain (1) can be displaced in such a way that it forms a loop having an upper strand, a lower strand, and a deflection zone connecting said two strands, thus defining an inner face and an outer face of the chain links in relation to the loop, wherein the upper strand lies on the lower strand under at least partial contact of the inner faces of chain links, and wherein at least some of the chain links are provided with rollers (16) which are inserted into the lateral link plates, are exposed on the inner face, and can roll off a running surface formed by the narrow faces of the lateral link plates (11, 12) of the respectively opposite strand in the elongated state of the chain, **characterized in that** the lateral link plates of each lateral link plate strand are formed by alternating inner link plates (14) and outer link plates (11, 12), and at least some of the outer link plates (11, 12) are provided with rollers (16), whereas only the inner link plates (14) comprise limit stops which delimit the pivot angle between adjoining link plates.

2. An energy guiding chain according to claim 1, **characterized in that** at least some of the outer link plates are composed of two link plate parts (11, 12) which are pivotable relative to each other about a pivot axis.

3. An energy guiding chain according to claim 2, **characterized in that** the assembled outer link plates are provided with rollers (16) whose rotary axis coincides with the pivot axis of the link plate parts.

4. An energy guiding chain according to one of the preceding claims, **characterized in that** the cross members (21) are fixed by means of suitable fastening means to the lateral link plates.

## Revendications

1. Chaîne porte-câbles à rouleaux (1) pour le guidage de flexibles, câbles et similaires, comportant un nombre de maillons de chaîne articulés les uns aux autres, formés par des pattes latérales (11, 12) parallèles les unes aux autres et connectées sous forme de faisceaux, et par des traverses (21) reliant les pattes, lesdites pattes latérales pouvant pivoter les unes par rapport aux autres autour d'un axe de pivotement commun à deux pattes latérales adjacentes, la chaîne porte-câbles (1) pouvant être déplacée pour former une boucle présentant un brin supérieur, un brin inférieur et une zone de déviation reliant ces deux brins, un côté intérieur et un côté extérieur étant définis sur les maillons de chaîne par rapport à la boucle, le brin supérieur s'appuyant sur le brin inférieur en contactant les côtés intérieurs des maillons de chaîne au moins en partie, et au moins certains maillons comportant des rouleaux de roulement (16) intégrés aux pattes latérales, libres sur le côté intérieur, lesdits rouleaux pouvant rouler sur une surface de roulement formée dans l'état étiré de la chaîne par les côtés étroits des pattes latérales (11, 12) du brin respectivement opposé, **caractérisée en ce que** les pattes latérales de chaque faisceau de pattes latérales sont formées de pattes intérieures (14) et de pattes extérieures (11, 12) alternées, et qu'au moins certaines pattes extérieures (11, 12) sont munies de rouleaux de roulement (16) tandis que seules les pattes intérieures (14) présentent des butées limitant l'angle de pivotement entre des pattes adjacentes.

2. Chaîne porte-câbles selon la revendication 1, **caractérisé en ce qu'**au moins certaines pattes latérales sont composées de deux parties de pattes (11, 12) qui peuvent pivoter les unes par rapport aux autres autour d'un axe de pivotement.

3. Chaîne porte-câbles selon la revendication 2, **caractérisé en ce que** les pattes extérieures sont munies de rouleaux de roulement (16) dont l'axe de rotation coïncide avec l'axe de pivotement des parties de pattes.

4. Chaîne porte-câbles selon l'une des revendications précédentes, **caractérisée en ce que** les traverses (21) sont fixées sur les pattes latérales par des moyens de fixation appropriés.
